# EUROPEAN PATENT APPLICATION

(11) **EP 4 517 880 A1**
(43) Date of publication of application: **05.03.2025**
(21) Application number: 23879835.9
(22) Date of filing: 18.10.2023
(51) Int. Cl.: H01M 4/58, H01M 4/36, H01M 4/38

(54) **METHOD FOR PRODUCING ELECTRODE MEMBER, SYSTEM FOR PRODUCING ELECTRODE MEMBER, METHOD FOR PRODUCING POSITIVE ELECTRODE ACTIVE MATERIAL, POSITIVE ELECTRODE ACTIVE MATERIAL, POSITIVE ELECTRODE MIXTURE AND SECONDARY BATTERY**

(30) Priority: 18.10.2022 JP 2022167033
(71) Applicant: Renaisis Co., Ltd., Saga 840-1106 (JP)
(72) Inventor: YAMASAKI Sadayoshi, Miyaki-gun, Saga 840-1106 (JP)
(74) Representative: Hasegawa, Kan
(86) International application number: PCT/JP2023/037723
(87) International publication number: WO 2024/085192

(57) **Abstract**

Provided is a novel method for producing a positive electrode active material, the method using an ion species other than lithium. A method for producing an electrode member, wherein sulfur-containing rubbers are used as a raw material, the electrode member is a positive electrode active material, the method comprising steps in which the raw material is thermally decomposed to separate into a solid matter and a dry distillation gas; the dry distillation gas is cooled to separate into an oil component and a gas; the oil component is distilled to separate into heavy oil, light oil and sulfur; the thus-obtained heavy oil and sulfur, a carbonized product for positive electrode active material and an ionic raw material containing one or more elements selected from the group consisting of Na, K, Ca and Mg are kneaded and heat-treated under a non-oxidizing atmosphere to obtain the positive electrode active material. A raw material derived from waste (such as plant combustion ash, a calcinated eggshell, or the like) can be used as the ionic raw material.

## Description

### Technical Field

### Reference to Related Application

The present application claims the benefit of priority from the Japanese Patent Application filed on October 18, 2022 (Japanese Patent Application No. 2022-167033). Priority is expressly claimed to the foregoing patent application, the entire disclosure of which is incorporated herein by reference for all purposes.

The present invention relates to a method for producing a positive electrode active material for a secondary battery and a method for producing an electrode member suitable for the positive electrode active material. The present invention also relates to a positive electrode mixture and a secondary battery using electrode members (including a positive electrode active material) obtained by the methods for producing these.

### Background Art

In recent years, there has been an increasing demand for lithium secondary batteries as small power sources for mobile phones and the like, and medium and large power sources for electric vehicles and power storage applications and the like. On the other hand, regarding lithium, as a main constituent element of a positive electrode active material of a lithium secondary battery, the profitable production thereof from saltwater lakes is limited to some countries, and thus there are concerns about supply instability and an increase in price associated with the rising demand for lithium secondary batteries.

Research and development of a novel positive electrode active material for a secondary battery that substitutes for a lithium secondary battery has been conducted, and as one of the candidates, a sulfur-based positive electrode active material is being researched and developed.

For example, Patent Document 1 discloses that sulfur-modified polyacrylonitrile obtained by heating a sulfur powder and a polyacrylonitrile powder under a non-oxidizing atmosphere is used as a positive electrode active material of a lithium secondary battery. Patent Document 2 discloses that fluorine-introduced sulfur-modified polyacrylonitrile in which fluorine is introduced to raise the potential is used as a positive electrode active material of a secondary battery.

On the other hand, there has been reported a method in which sulfur-containing rubbers such as rubbers derived from a tire are used as a raw material to produce a positive electrode active material (Patent Document 3). In this production method, the rubbers are thermally decomposed and separated into a solid matter and a dry distillation gas, the dry distillation gas is cooled and separated into an oil component and a gas, and the oil component is distilled and separated into sulfur and heavy oil, this sulfur and heavy oil are kneaded and heat-treated to obtain a product, and this product is used as a positive electrode active material of a lithium secondary battery.

### Citation List

### Patent Documents

Patent Document 1: JP 5534227 B
Patent Document 2: JP 2013-101811 A
Patent Document 3: JP 6266655 B

### Summary of Invention

### Technical Problem

In recent years, there has also been developed a secondary battery in which an alkali metal (Na, K) or an alkaline earth metal (Ca, Mg) other than lithium is used, but it is believed that lithium secondary batteries will lead in mobile device applications and vehicle applications where high volume capacity is required.

On the other hand, in a stationary secondary battery for which a large volume capacity is not required, that is, which is not required to be compact, it is conceivable to use ion species other than lithium in a secondary battery.

The sulfur-modified polyacrylonitrile-based positive electrode active materials described in Patent Documents 1 and 2 are substantially used for lithium secondary batteries, and there are some examples where they are used in sodium secondary batteries, but the capacity is limited, and they have no satisfactory results for secondary batteries using other alkali metals (K) or alkaline earth metals (Ca, Mg). Also, the sulfur-modified polyacrylonitrile-based positive electrode active material uses special acrylonitrile as a raw material, and hence is difficult to be obtained and tends to be expensive.

Moreover, the positive electrode active material made by using the rubber-derived raw material in Patent Document 3 has an advantage in which a waste such as rubbers derived from a waste tire can be used as sulfur-containing rubbers, which are a raw material, and a lithium secondary battery including the positive electrode active material achieved an excellent performance, but the positive electrode active material cannot be directly applied to a secondary battery using an ion species other than Li.

Under such circumstances, an object of the present invention is to provide a method for producing an electrode member in which sulfur-containing rubbers are used as a raw material and a system for producing the electrode member.

Another object of the present invention is to provide a method for producing a novel positive electrode active material in which ion species other than lithium are used, a positive electrode active material, a positive electrode mixture, and a secondary battery.

### Solution to Problem

As a result of intensive studies to solve the above problems, the present inventor has found that the following invention meets the objects and has completed the present invention.

That is, the present invention relates to the following method for producing an electrode member.
<1> A method for producing an electrode member by using sulfur-containing rubbers as a raw material, the electrode member being a positive electrode active material, the method including: a step (1) of thermally decomposing the raw material to separate into a solid matter and a dry distillation gas; a step (2) of sorting out a crude carbonized product from the solid matter; a step (3) of cleaning the crude carbonized product, and then heat-treating under a non-oxidizing atmosphere to obtain a refined carbonized product; a step (4) of cooing the dry distillation gas to separate into an oil component and a gas, and distilling the oil component to separate into heavy oil, light oil, and sulfur; a step (5) of pulverizing and drying a solid matter to obtain a positive electrode active material, the solid matter obtained by kneading: an ionic raw material (A) containing one or more elements selected from the group consisting of Na, K, Ca, and Mg; a carbonized product for positive electrode active material (B); heavy oil (C); and sulfur (D) and heat-treating under a non-oxidizing atmosphere, wherein the method satisfies either one or more of the following Requirements (i) to (iii).
   Requirement (i): at least a part of the carbonized product for positive electrode active material (B) is the refined carbonized product obtained by the step (3)
   Requirement (ii): at least a part of the heavy oil (C) is heavy oil obtained by the step (4)
   Requirement (iii): at least a part of the sulfur (D) is sulfur obtained by the step (4)
<2> The method for producing an electrode member according to <1>, wherein at least a part of Component (A) is one or more selected from the group consisting of an inorganic detergent, plant combustion ash, a calcinated eggshell, a calcinated seashell, gypsum, and hot spring scale.
<3> The method for producing an electrode member according to <1> or <2>, wherein at least a part of Component (A) is wood combustion ash obtained from combustion of wood.
<4> The method for producing an electrode member according to <1> or <2>, wherein at least a part of Component (A) is a calcinated eggshell.
<5> The method for producing an electrode member according to any of <1> to <4>, wherein the cleaning of the crude carbonized product in the step (3) is subcritical or supercritical carbon dioxide treatment.
<6> The method for producing an electrode member according to any of <1> and <5>, wherein the sulfur-containing rubbers are rubbers derived from a tire.
<7> A method for producing an electrode member by using sulfur-containing rubbers as a raw material,
   the electrode member being a positive electrode active material, the method including the steps of: thermally decomposing the raw material to separate into a solid matter and a dry distillation gas; cooling the dry distillation gas to separate into an oil component and a gas, distilling the oil component to separate into heavy oil, light oil and sulfur, and kneading the resultant heavy oil and sulfur with an ionic raw material containing one or more elements selected from the group consisting of Na, K, Ca, and Mg, and heat-treating a carbonized product for positive electrode active material under a non-oxidizing atmosphere to obtain a positive electrode active material.
<8> The method for producing an electrode member according to <7>, wherein the ionic raw material is one or more selected from the group consisting of an inorganic detergent, plant combustion ash, a calcinated eggshell, a calcinated seashell, gypsum, and hot spring scale.
<9> A method for producing an electrode member by using sulfur-containing rubbers as a raw material, the electrode member being a negative electrode active material, the method including the steps of thermally decomposing the raw material to separate into a solid matter and a dry distillation gas; sorting out a crude carbonized product from the solid matter; treating the crude carbonized product with subcritical or supercritical carbon dioxide and then heat-treating under a non-oxidizing atmosphere to obtain a refined carbonized product as a negative electrode active material.
<10> The method for producing an electrode member according to any of <1> to <9>, wherein the sulfur-containing rubbers are rubbers derived from a tire.
<11> A positive electrode mixture containing a positive electrode active material obtained by the method according to any of <1> to <8>, or <10>.
<12> A secondary battery including a positive electrode, a negative electrode, and an electrolyte, the positive electrode including the positive electrode mixture according to <11>.
<13> The secondary battery according to <12>, wherein the negative electrode contains a negative electrode active material obtained by the method according to <9>.
<14> The secondary battery according to <12> or <13>, wherein the electrolytic solution is tris(2,2,2-trifluoroethyl)phosphate (TFEP) containing dissolved sodium bis(fluorosulfonyl)imide (NaFSI) or potassium bis(fluorosulfonyl)imide (KFSI) as an electrolyte salt.

The present invention also relates to a system for producing an electrode member set forth below.
<1a> A system for producing an electrode member by using the method for producing an electrode member according to any of <1> to <10>, the system including: a heat-treatment unit (x) that thermally decomposes the raw material to separate into a solid matter and a dry distillation gas; a sorting unit (y1) that sorts out a crude carbonized product from the solid matter; a cleaning unit (y2) that cleans the crude carbonized product; a heat-treatment unit (y3) that heat-treats the crude carbonized product after cleaning under a non-oxidizing atmosphere to obtain a refined carbonized product; a separation unit (z1) that cools the dry distillation gas to separate into an oil component and a gas and distills the oil component to separate into heavy oil, light oil, and sulfur; a kneading unit (z2) that knead an ionic raw material (A) containing one or more elements selected from the group consisting of Na, K, Ca, and Mg, a carbonized product for positive electrode active material (B), heavy oil (C), and sulfur (D) to obtain a raw material mixture; a heat-treatment unit (z3) that heat-treats the raw material mixture under a non-oxidizing atmosphere to obtain a solid matter; and an adjusting unit (z4) that pulverizes and dries the resultant solid matter.
<2a> The system for producing an electrode member according to <1a>, wherein the crude carbonized product is treated with subcritical or supercritical carbon dioxide in the cleaning unit (y2).
<3a> The system for producing an electrode member according to <2a>, which includes a gas treatment unit (w1) that causes combustion of the gas separated by the separation unit (z1) and collects generated carbon dioxide, wherein in the cleaning unit (y2), the crude carbonized product is treated with subcritical or supercritical carbon dioxide by using the carbon dioxide collected by the gas treatment unit (w1).
<4a> The system for producing an electrode member according to any of <1a> to <3a>, wherein the heat-treatment unit (x) causes combustion of the light oil separated by the separation unit (z1) and thermally decomposes the raw material by using generated heat.
<5a> The system for producing an electrode member according to any of <1a> to <4a>, which includes a pulverizing unit (w3) that pulverizes the refined carbonized product obtained by the heat-treatment unit (y3).
<6a> The system for producing an electrode member according to any of <1a> to <5a>, which includes an ionic raw material production unit (w4) that produces one or more selected from the group consisting of an inorganic detergent, plant combustion ash, a calcinated eggshell, a calcinated seashell, gypsum, and hot spring scale.
<7a> The system for producing an electrode member according to any of <1a> to <6a>, which includes a neutralization treatment unit (w5), wherein the neutralization treatment unit (w5) neutralizes a sulfide generated in the heat-treatment unit (z3) to produce a neutralized solid matter content, and the ionic raw material (A) contains the neutralized solid matter content.
<8a> The system for producing an electrode member according to any of <1a> to <7a>, wherein the sulfur-containing rubbers are rubbers derived from a tire.

The present invention also relates to the following invention.
<1b> A method for producing a positive electrode active material, including a step of heat-treating a raw material mixture obtained by mixing the following Components (A) to (D) under a non-oxidizing atmosphere:
   Component (A): an ionic raw material containing one or more elements selected from the group consisting of Na, K, Ca, and Mg
   Component (B): a carbonized product for positive electrode active material
   Component (C): heavy oil
   Component (D): sulfur
<2b> The method for producing a positive electrode active material according to <1b>, wherein at least a part of Component (A) is one or more selected from the group consisting of an inorganic detergent, plant combustion ash, a calcinated eggshell, a calcinated seashell, gypsum, and hot spring scale.
<3b> The method for producing a positive electrode active material according to <1b> or <2b>, wherein at least a part of Component (B) is a refined carbonized product obtained by thermally decomposing sulfur-containing rubbers to separate into a solid matter and a dry distillation gas, sorting out a crude carbonized product from the solid matter, and heat-treating the crude carbonized product.
<4b> The method for producing a positive electrode active material according to any of <1b> to <3b>, wherein at least a part of Component (C) is heavy oil obtained by thermally decomposing sulfur-containing rubbers to separate into a solid matter and a dry distillation gas, cooling the dry distillation gas to separate into an oil component and a gas, distilling the oil component to separate into the heavy oil, light oil, and sulfur.
<5b> The method for producing a positive electrode active material according to any of <1b> to <4b>, wherein at least a part of Component (D) is sulfur obtained by thermally decomposing sulfur-containing rubbers to separate into a solid matter and a dry distillation gas, cooling the dry distillation gas to separate into an oil component and a gas, distilling the oil component to separate into heavy oil, light oil, and the sulfur.
<6b> The method for producing a positive electrode active material according to <1b>, wherein Component (A) is one or more selected from the group consisting of an inorganic detergent, plant combustion ash, a calcinated eggshell, a calcinated seashell, gypsum, and hot spring scale,
   at least a part of Component (B) is a refined carbonized product obtained by thermally decomposing sulfur-containing rubbers to separate into a solid matter and a dry distillation gas, sorting out a crude carbonized product from the solid matter, and heat-treating the crude carbonized product,
   at least a part of Component (C) is heavy oil obtained by cooling the dry distillation gas to separate into an oil component and a gas, distilling the oil component to separate into the heavy oil, light oil, and sulfur, and
   at least a part of Component (D) is sulfur obtained by distilling the oil component to separate into heavy oil, light oil, and the sulfur.
<7b> The method for producing a positive electrode active material according to any of <3b> to <6b>, wherein the sulfur-containing rubbers are rubbers derived from a tire.
<8b> A positive electrode active material obtained by the method according to any of <1b> to <7b>.
<1c> A positive electrode mixture containing the positive electrode active material according to <8b>.
<2c> A secondary battery including a positive electrode, a negative electrode, and an electrolyte, the positive electrode including the positive electrode mixture according to <1c>.
<3c> The secondary battery according to <1c> or <2c>, wherein the electrolytic solution is a phosphate containing dissolved sodium bis(fluorosulfonyl)imide (NaFSI) or potassium bis(fluorosulfonyl)imide (KFSI) as an electrolyte salt.
<4c> The secondary battery according to <3c>, wherein the phosphate is tris(2,2,2-trifluoroethyl)phosphate (TFEP).

### Advantageous Effects of Invention

According to the present invention, there are provided: a method for producing an electrode member using sulfur-containing rubbers as a raw material; and a system for producing the electrode member. Also provided are a method for producing a positive electrode active material containing an ion species other than lithium, a positive electrode active material, a positive electrode mixture, and a secondary battery.

### Brief Description of Drawings

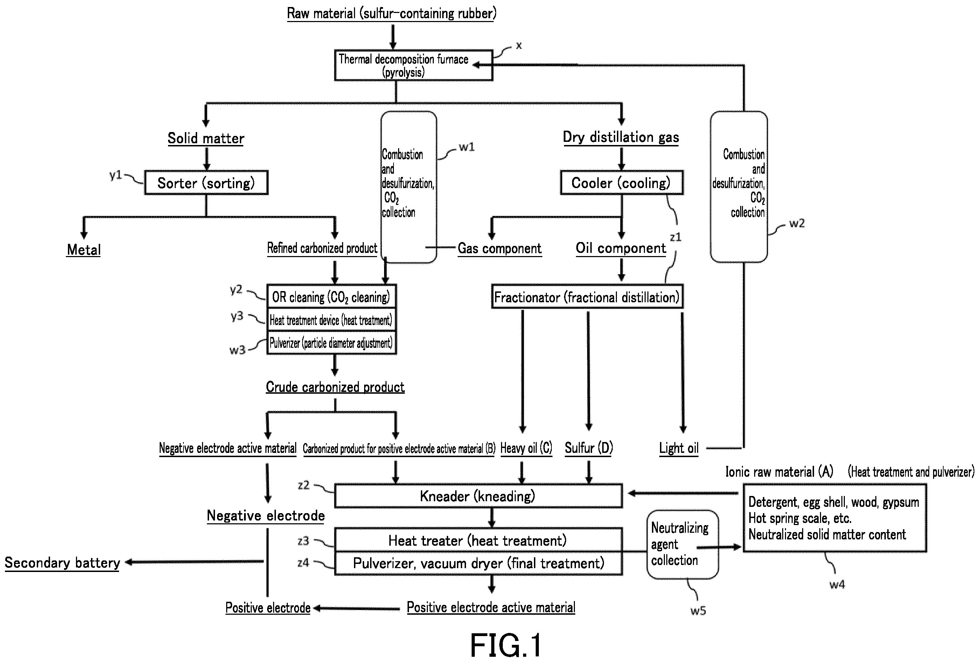

FIG. 1 is a conceptual diagram of a system for producing an electrode member according to an embodiment of the present invention.

### Reference Signs List

x Heat-treatment unit
y1 Sorting unit
y2 Cleaning unit
y3 Heat-treatment unit
z1 Separation unit
z2 Kneading unit
z3 Heat-treatment unit
z4 Adjusting unit
w1 Gas treatment unit
w2 Combustion unit
w3 Pulverizing unit
w4 Ionic raw material production unit
w5 Neutralization treatment unit

### Description of Embodiments

Hereinafter, the present invention will be described in detail with reference to examples and the like, but the present invention is not limited to the examples and the like set forth below and the examples and the like can be freely modified and implemented without departing from the gist of the present invention. Note that, as used herein, "from ... to ..." or "... to ..." is used as an expression including numerical values or physical quantities before and after the "to". Also, as used herein, the expression "A and/or B" includes "only A", "only B", and "both A and B".

### Definition of Terms

In the present invention, the term "electrode member" means "a member constituting an electrode of a battery", and specifically means an electrode active material (a positive electrode active material and a negative electrode active material), a conductive material (a positive electrode conductive material and a negative electrode conductive material), and a current collector (a positive electrode current collector and a negative electrode current collector).

In the present invention, the term "positive electrode active material" is an electrode active material that is used for a positive electrode, among substances involved in a reaction for generating electric energy. In addition, in the present invention, the term "negative electrode active material" is an electrode active material that is used for a negative electrode, among substances involved in a reaction for generating electric energy.

In the present invention, the term "carbonized product" is a concept including not only "a carbon material made of purely carbon atoms" but also "a material containing carbon atoms and impurities (such as a mineral component derived from a carbon-containing raw material) created by heat-treatment of a carbon-containing raw material".

In the present invention, the term "crude carbonized product" is a carbonized product sorted out from a solid matter obtained by thermally decomposing a raw material as sulfur-containing rubbers. In the present invention, the term "refined carbonized product" is a carbonized product obtained in a manner that a crude carbonized product is cleaned and then heat-treated in a non-acidic atmosphere. The pulverization process for the crude carbonized product and refined carbonized products is optional.

### <1. Method for Producing Positive Electrode Active Material>

The present invention relates to a method for producing a positive electrode active material (hereinafter, referred to as a "method for producing a positive electrode active material of the present invention") including a step of heat-treating a raw material mixture obtained by mixing the following Components (A) to (D) under a non-oxidizing atmosphere:
Component (A): an ionic raw material containing one or more elements selected from the group consisting of Na, K, Ca, and Mg
Component (B): a carbonized product for positive electrode active material
Component (C): heavy oil
Component (D): sulfur

The positive electrode active material of the present invention can be produced as follows by using Components (A) to (D) as starting materials. That is, the positive electrode active material can be produced by an inclusion of the following Steps (p1) and (p2) in this order:
Step (p1): a step of mixing Components (A) to (D) to obtain a raw material mixture
Step (p2): a step of heat-treating the resultant raw material mixture in a non-oxidizing atmosphere to obtain a heat-treated product.

Note that, the positive electrode active material of the present invention can be suitably produced by the "System for producing an electrode member of the present invention" described in <2. Method and System for Producing Electrode Member> to be described later, but is not limited thereto, and the method for producing a positive electrode active material of the present invention can also be carried out by using production facility other than "the system for producing an electrode member of the present invention".

Hereinafter, the method for producing a positive electrode active material of the present invention will be described in detail.

### <Step (p1)>

The step (p1) is a step of mixing Components (A) to (D) to obtain a raw material mixture.

### <Component (A)>

Component (A) is an ionic raw material containing one or more elements selected from the group consisting of Na, K, Ca, and Mg.

The ionic raw material as Component (A) means a raw material containing a target ion species (Na, K, Ca, or Mg) and capable of providing the target ion species to the positive electrode active material.

The ionic raw material used as Component (A) may be one type, or two or more types thereof may be used. When two or more types of the ionic raw materials are used, the ion species may be the same as or different from each other.

Examples of Component (A) include percarbonates, carbonates, hydrogen carbonates, sulfates, and nitrates of Na, K, Ca, or Mg.

As Component (A), an unused raw material can also be used, but it is preferable to use a raw material derived from waste. As Component (A), only an unused raw material may be used, only a raw material derived from waste may be used, or a mixture (mixing ratio can be freely chosen) of a new raw material and a raw material derived from waste may be used.

One of preferable examples of Component (A) is an inorganic detergent containing a peroxide bleach. Sodium percarbonate contained in the peroxide bleach of an inorganic detergent can be a preferred sodium source.

One preferred example of Component (A) is plant combustion ash (particularly wood combustion ash). The term "plant combustion ash" refers to combustion ash of a plant-derived substance and contains Na, K, Ca, and Mg (particularly Ca) derived from the plant-derived substance and mineral components other than these.

The plant-derived substance is not particularly limited as long as the object of the present invention is not compromised, but is preferably at least one selected from chaff, straw, bamboo, thinned wood, and weeds from the viewpoint of waste utilization.

One preferred example of the plant combustion ash is wood combustion ash as combustion ash of a wood raw material. The wood raw material is not particularly limited as long as the object of the present invention is not compromised, and typical examples thereof include: broadleaf trees such as cedar, larch and cypress; coniferous trees such as beech, white birch and oak; and bamboo. The wood raw material includes, from the viewpoint of waste utilization, house dismantling wood, wood waste from sawmills, wood waste from furniture factories, and trees and woods.

One preferred example of Component (A) is a calcinated product of a biological material containing calcium. Examples of the "biological material containing calcium" include eggshells and seashells, and their calcinated products, calcinated eggshells and calcinated seashells, can be suitably used as an ionic raw material that provides calcium.

One preferred example of Component (A) is gypsum. "Gypsum" is a mineral containing calcium sulfate and is suitable as a calcium source.

The gypsum is not particularly limited as long as the object of the present invention is not compromised and includes, from the viewpoint of waste utilization, gypsum produced by separating gypsum board.

One of preferable examples of Component (A) is a hot spring scale. The "hot spring scale" is a precipitate or deposit of an insoluble component originally dissolved in hot spring water in response to a change in temperature or pressure, upon contact with air, or contact with a pipe, or the like.

The component of the hot spring scale varies depending on the original hot spring water, but contains at least one of the group of calcium, sodium, potassium, and magnesium. In addition, the hot spring scale often contains components such as silica-based minerals and iron oxide hydroxide, and therefore the hot spring scale may be used as Component (A) after removing these components as necessary.

### <Component (B)>

The carbonized product for positive electrode active material serving as Component (B) is a carbonized product that is used as a raw material for the positive electrode active material.

As the carbonized product for the positive electrode active material, any carbon material can be used as long as the object of the present invention is not compromised, and examples thereof include graphite powder, carbon black (such as acetylene black, ketjen black, furnace black, or the like), and a fibrous carbon material (such as carbon nanotubes, carbon nanofibers, or vapor-grown carbon fibers).

As the carbonized product for positive electrode active material, a carbon-containing raw material as a raw material is preferably heat-treated under inert conditions. Any carbon-containing raw material can be used as a raw material of the carbonized product as long as the object of the present invention is not compromised, and examples thereof include biomass raw material (such as wood, bamboo, chaff, or the like), various resin materials, and plastics such as rubber materials, and one type or two or more types of these carbon-containing raw materials are used as the carbon-containing raw material.

Component (B) preferably contains at least a part of the refined carbonized product described in <2. Method and System for Producing Electrode Member> described later.

That is, a preferred example of the carbonized product for positive electrode active material serving as Component (B) is at least partially a refined carbonized product obtained in a manner that sulfur-containing rubbers are thermally decomposed to separate into a solid matter and a dry distillation gas, a crude carbonized product is sorted out from the solid matter, and the refined carbonized product is obtained by heat-treatment of the crude carbonized product.

The heat-treatment conditions are appropriately determined in view of the type of the carbon-containing raw material and the physical properties (such as crystallinity, porosity, etc.) of the intended carbonized product. Typically, a carbonization treatment is conducted by heating the carbon-containing raw material under a non-oxidizing atmosphere (such as, under the flow of an inert gas such as N₂). The carbonization treatment temperature is, for example, 500°C or higher and 1200°C or lower.

### <Component (C)>

The heavy oil as Component (C) is an essential component of the positive electrode active material, and functions as a binder for bonding other components during production.

As the heavy oil, any of coal tar based, petroleum based and rubbers based heavy oils can be used.

Component (C) preferably contains at least partially heavy oil described in <2. Method and System for Producing Electrode Member> described later.

That is, a preferred example of the heavy oil serving as Component (C) is at least partially heavy oil obtained in a manner that sulfur-containing rubbers are thermally decomposed to separate into a solid matter and a dry distillation gas, the dry distillation gas is cooled to separate into an oil component and a gas, and the oil component is distilled to separate into the heavy oil, light oil, and sulfur.

### <Component (D)>

Sulfur as Component (D) may be a commercially available product, or a product separated from a sulfur-containing compound or a sulfur-containing composition may be used.

Component (D) preferably contains at least partially sulfur described in <2. Method and System for Producing Electrode Member> described later.

That is, at least a part of Component (D) is sulfur obtained in a manner that sulfur-containing rubbers are thermally decomposed to separate into a solid matter and a dry distillation gas, the dry distillation gas is cooled to separate into an oil component and a gas, and the oil component is distilled to separate into heavy oil, light oil, and the sulfur.

In a preferred example of the method for producing a positive electrode active material of the present invention, Component (A) is one or more selected from the group consisting of an inorganic detergent, plant combustion ash, a calcinated eggshell, a calcinated seashell, gypsum, and hot spring scale; at least a part of Component (B) is a refined carbonized product obtained by thermally decomposing sulfur-containing rubbers to separate into a solid matter and a dry distillation gas, sorting out a crude carbonized product from the solid matter, and heat-treating the crude carbonized product; at least a part of Component (C) is heavy oil obtained by cooling the dry distillation gas to separate into an oil component and a gas, distilling the oil component to separate into the heavy oil, light oil, and sulfur; and at least a part of Component (D) is sulfur obtained by distilling the oil component to separate into heavy oil, light oil, and the sulfur.

The proportions of Components (A) to (D) are appropriately determined according to the types of Components (A) to (D) so as to be within a respective range that functions as the positive electrode active material.

For example, when Component (A) is wood combustion ash, preferred proportions of Components (A) to (D) are such that Component (A) is contained in an amount from 20 to 60 wt.%, Component (B) is contained in an amount from 10 to 30 wt.%, Component (C) is contained in an amount from 5 to 15 wt.%, and Component (D) is contained in an amount from 20 to 40 wt.%.

As a mixing method in the step (p1), an industrially commonly used dry mixing can be used. Examples of the dry mixing device include a V-type mixer, a W-type mixer, a ribbon mixer, a drum mixer, and a dry ball mill. The mixing can also be conducted by wet mixing as long as the object of the present invention is not compromised.

### <Step (p2)>

The step (p2) is a step in which the raw material mixture obtained in the step (p1) is heat-treated in a non-oxidizing atmosphere to obtain a heat-treated product. A heat-treated product (positive electrode active material) is obtained by the step (p2).

As used herein, the term "non-oxidizing atmosphere" refers to an atmosphere substantially free from any oxidizing gas such as oxygen, and is typically an inert gas atmosphere such as nitrogen, argon, or helium. A reducing atmosphere such as hydrogen or an inert gas containing hydrogen may also be used as long as the object of the present invention is not compromised.

In the step (p2), the heat-treatment of the raw material mixture is conducted, for example, in a manner that after the raw material mixture has been brought into a non-oxidizing atmosphere, the temperature is raised from room temperature to the heat-treatment temperature, the heat-treatment is performed at the heat-treatment temperature for a predetermined time, and then the temperature is lowered to room temperature, for example.

The heat-treatment temperature and the heat-treatment time are appropriately set according to the type and proportion of each of Components (A) to (D) so as to be within a range where an intended heat-treated product (positive electrode active material) is produced.

The heat-treatment temperature is, for example, 250°C or higher and 500°C or lower (preferably 300°C or higher and 400°C or lower). The heat-treatment time is, for example, 10 minutes or more and 10 hours or less.

The heat-treated product obtained in the step (p2) is used after being pulverized as necessary. As the pulverization method, an industrially commonly used pulverization can be used. Examples of the pulverizer include comminutors such as a vibration mill, a jet mill, and a dry ball mill. A classification operation such as air classification may also be conducted as necessary.

### <2. Method and System for Producing Electrode Member>

The above-described method for producing a positive electrode active material of the present invention can be a part of a method for producing an electrode member by using sulfur-containing rubbers as a raw material (hereinafter referred to as "the method for producing an electrode member of the present invention") described below. The method for producing an electrode member of the present invention can be suitably implemented by using a system for producing an electrode member (hereinafter, referred to as "the system for producing an electrode member of the present invention") described below.

In the method for producing an electrode member of the present invention, not only carbonized product, sulfur, and heavy oil, which are main raw materials of the electrode member, but also the light oil, sulfide, carbon dioxide, which are produced as by-products, and exhaust heat can be reused as raw materials and energy when the electrode member (electrode active material, conductive material, and current collector) is produced from the sulfur-containing rubbers as a raw material. Therefore, in the method for producing an electrode member of the present invention, sulfur-containing rubbers such as a tire can be used as a raw material of a battery member.

The method for producing an electrode member of the present invention can use an unused raw material, but has an advantage that rubbers (such as waste tires or the like) usually discarded can be effectively utilized as a raw material.

A method for producing an electrode member of the present invention is a method for producing an electrode member by using sulfur-containing rubbers as a raw material, the electrode member is a positive electrode active material, the method is characterized by including the steps of thermally decomposing the raw material to separate into a solid matter content and a dry distillation gas; cooling the dry distillation gas to separate into an oil component and a gas; distilling the oil component to separate into heavy oil, light oil and sulfur; kneading the resultant heavy oil and sulfur with an ionic raw material containing one or more elements selected from the group consisting of Na, K, Ca, and Mg, and a carbonized product for positive electrode active material, and heat-treating the mixture under a non-oxidizing atmosphere.

Another example of the method for producing an electrode member of the present invention is a method for producing an electrode member in which sulfur-containing rubbers are used as a raw material, wherein the electrode member is a negative electrode active material, and the method is characterized by including the steps of thermally decomposing the raw material to separate into a solid matter and a dry distillation gas; sorting out a crude carbonized product from the solid matter; treating the crude carbonized product with a subcritical or supercritical carbon dioxide, and then heat-treating under a non-oxidizing atmosphere to obtain a refined carbonized product as a negative electrode active material.

Another example of the method for producing an electrode member of the present invention is a method for producing an electrode member in which sulfur-containing rubbers are used as a raw material, the electrode member is a positive electrode active material, the method is characterized by including: a step (1) of thermally decomposing the raw material to separate into a solid matter and a dry distillation gas; a step (2) of sorting out a crude carbonized product from the solid matter; a step (3) of cleaning the crude carbonized product and then heat-treating under a non-oxidizing atmosphere to obtain a refined carbonized product; a step (4) of cooling the dry distillation gas to separate into an oil component and a gas, and the oil component is distilled to separate into heavy oil, light oil, and sulfur; and a step (5) of pulverizing and drying a solid matter content to obtain a positive electrode active material, the solid matter content obtained by kneading an ionic raw material (A) containing one or more elements selected from the group consisting of Na, K, Ca, and Mg, a carbonized product for positive electrode active material (B), the heavy oil (C), and the sulfur (D) and heat-treating under a non-oxidizing atmosphere, and the method is characterized by satisfying either one or more of the following Requirements (i) to (iii):
Requirement (i): at least a part of the carbonized product for positive electrode active material (B) is a refined carbonized product obtained by the step (3)
Requirement (ii): at least a part of the heavy oil (C) is heavy oil obtained by the step (4)
Requirement (iii): at least a part of the sulfur (D) is sulfur obtained by the step (4)

The method for producing an electrode member of the present invention described above can be suitably implemented using the system for producing an electrode member of the present invention.

The system for producing an electrode member of the present invention is a system for producing an electrode member by using the method for producing an electrode member of the present invention described above, the system including: a heat-treatment unit (x) that thermally decomposes the raw material to separate into a solid matter material and a dry distillation gas; a sorting unit (y1) that sorts out a crude carbonized product from the solid matter; a cleaning unit (y2) that cleans the crude carbonized product; a heat-treatment unit (y3) that heat-treats the crude carbonized product after cleaning under a non-oxidizing atmosphere to obtain a refined carbonized product; a separation unit (z1) that cools the dry distillation gas to separate into an oil component and a gas and distills the oil component to separate into heavy oil, light oil, and sulfur; a kneading unit (z2) that kneads an ionic raw material (A) containing one or more elements selected from the group consisting of Na, K, Ca, and Mg, a carbonized product for positive electrode active material (B), heavy oil (C), and sulfur (D) to obtain a raw material mixture; a heat-treatment unit (z3) that heat-treats the raw material mixture under a non-oxidizing atmosphere to obtain a solid matter; and an adjusting unit (z4) that pulverizes and dries the resultant solid matter.

Hereinafter, an example of an embodiment of the method for producing an electrode member of the present invention and the system for producing an electrode member of the present invention will be described with reference to the drawings. Note that the present invention is not limited to embodiments described below and the embodiments can be freely modified and implemented without departing from the gist of the present invention.

FIG. 1 is a conceptual diagram of a system for producing a battery member according to an embodiment of the present invention.

As illustrated in FIG. 1, in the system for producing a battery member according to the present embodiment, sulfur-containing rubbers are used as a raw material, the raw material is thermally decomposed to separate into a solid matter and a dry distillation gas, a crude carbonized product is sorted out from the solid matter, a refined carbonized product (a carbonized product for negative electrode active material and/or a carbonized product for positive electrode active material (corresponding to Component (B))) is produced from a resultant crude carbonized product, furthermore the dry distillation gas is cooled to separate into an oil component and a gas component, an oil component is distilled and separated into heavy oil, light oil, and sulfur, and the heavy oil (corresponding to Component (C)) and the sulfur (corresponding to Component (D)) and the refined carbonized product (corresponding to Component (B)), an ionic raw material (corresponding to Component (A)) are kneaded and heat-treated to produce a positive electrode active material.

As described above, the sulfur-containing rubbers can be recycled as a raw material and can be used as an electrode member.

The resultant negative electrode active material together with a binder is applied onto a negative electrode current collector and thereby the negative electrode can be produced. The resultant positive electrode active material together with a binder is applied onto a positive electrode current collector and thereby the positive electrode can be produced. The produced positive electrode and negative electrode can be used to produce a battery.

Note that, the negative electrode active material, the negative electrode conductive material, and the negative electrode, as well as the positive electrode active material, the positive electrode conductive material, and the positive electrode according to the present invention can be used not only a case where these materials are used to produce an identical battery, but also a case where these materials are used to produce different batteries.

In the system for producing a battery member according to the embodiment of the present invention, first, the rubbers serving as a raw material are subjected to a thermal decomposition treatment by using a thermal decomposition furnace as a heat-treatment unit (x). As a result, the rubbers are separated into a solid matter in solid form and a dry distillation gas in gaseous form.

The heat of combustion during the combustion of light oil in a combustion furnace as a combustion unit (w2) is used as the heat for pyrolysis of the rubbers as a raw material in a thermal decomposition furnace. When the combustion heat is insufficient, fuel is added from the outside to heat up. The use of the combustion heat of the light oil reduces the addition of fuel from the outside and improves the energy efficiency of the producing method (and the producing system) according to the present embodiment.

Note that, the thermal decomposition treatment conditions (shape and size of thermal decomposition furnace, temperature, thermal decomposition time, etc.) in the heat-treatment unit (x) can be appropriately set according to the amount, type, and the like of the raw material to be thermally decomposed. As the heat-treatment unit (x), any heat-treatment unit can be used so long as the raw material can be thermally decomposed and separated into a solid matter and a dry distillation gas.

The rubbers as a raw material are required to be sulfur-containing rubbers and are preferably rubbers derived from a tire. Here, the "rubbers derived from a tire" means rubbers contained in tires, and are obtained by removing tire members (metals such as reinforcing materials) other than the rubbers.

Any tire made by using vulcanized rubber can be used as the tire, and examples thereof include pneumatic tires and solid tires. As the rubbers as a raw material, an unused tire can also be used, but there can be also used a tire (waste tire) discarded after use, or a waste generated and discarded as a defective product or a surplus material in the process of producing a tire and containing sulfur-containing rubbers as a main component.

Moreover, for the rubbers as a raw material, not only the above-described tire application, but also, for example, an anti-vibration rubber member for automobiles can be used.

The solid matter separated from the rubbers by thermal decomposition is sorted out with a sorter as a sorting unit (y1). Thereby, the crude carbonized product is sorted out from a matter other than the crude carbonized product (typically metal). As described above, the tire contains a metal such as a reinforcing material other than the rubbers, and the sorting process removes the metal from the solid matter.

As the sorting unit (y1), any sorting unit can be used as long as the crude carbonized product can be sorted out from the solid matter obtained by the heat-treatment unit (x). As the sorting unit (y1), for example, a magnetic sorter, an air sorter, or a sieve sorter can be used.

The metal sorted out from the solid matter can be recycled as a metal resource.

On the other hand, the crude carbonized product sorted out from the solid matter is cleaned in order to remove impurities. Specifically, subcritical/supercritical treatment apparatus as the cleaning unit (y2) is used to conduct subcritical or supercritical carbon dioxide treatment, whereby the crude carbonized product is cleaned with the subcritical or supercritical carbon dioxide, and can be enhanced in the quality and performance as a carbonized product (refined carbonized product) for the negative electrode active material or for the positive electrode active material.

The crude carbonized product sorted out from the solid matter may be pulverized, if necessary, prior to cleaning.

Note that, any cleaning unit can be used as the cleaning unit (y2) as long as the crude carbonized product sorted out from the solid matter can be cleaned.

The crude carbonized product after cleaning can be heat-treated (at from 500 to 1200°C under non-oxidizing atmosphere) with a heat treater as a heat-treatment unit (y3), and thereby a refined carbonized product can be obtained. The resultant refined carbonized product can be recycled as a carbonized product for negative electrode active material or a carbonized product for positive electrode active material.

Note that the heat-treatment conditions (shape and dimensions of heat treater, temperature, heat-treatment time, etc.) in the heat-treatment unit (y3) can be appropriately set according to the amount, type, and the like of the crude carbonized product to be heat-treated. As the heat-treatment unit (y3), any heat-treatment unit can be used as long as the crude carbonized product to be heat-treated can be heat-treated under a non-oxidizing atmosphere to obtain a refined carbonized product (a carbonized product for negative electrode active material and a carbonized product for positive electrode active material).

The resultant refined carbonized product preferably undergoes a process to remove iron, particularly when the resultant purified carbonized product is used as a negative electrode active material.

When the resultant refined carbonized product is used as a negative electrode active material, the resultant purified carbonized product is preferably pulverized. The resultant refined carbonized product can be pulverized with a pulverizer as a pulverizing unit (w3) and formed into fine powders. The pulverized refined carbonized product can be formed into a negative electrode active material by using a binder and thereby enabled to be recycled as a negative electrode of a battery.

Examples of the pulverizing unit (w3) include comminutors such as a vibration mill, a jet mill, and a dry ball mill.

The resultant refined carbonized product can be used for applications (such as an active material for a capacitor, a carrier for a fuel cell catalyst, etc.) other than a negative electrode active material and a conductive material of a secondary battery.

On the other hand, the dry distillation gas separated from the rubbers by thermal decomposition is sent to a separation unit (z1) that separates the dry distillation gas. The separation unit (z1) includes a cooler that separates the dry distillation gas into a gas and a liquid, a distiller that distills the liquid separated by the cooler, and a desulfurizer (not illustrated) that removes sulfur from the gas or the liquid.

The dry distillation gas is first cooled by using a cooler. As a result, the dry distillation gas is separated into an oil component in liquid form and a gas component (non-condensed gas) in gaseous form.

Here, the cooling temperature by the cooler can control the production ratio and components of the heavy oil and the non-condensed gas. A lower cooling temperature increases the production ratio of the heavy oil and reduces the amount of hydrocarbon contained in the non-condensed gas. Therefore, the hydrocarbon concentration in the non-condensed gas is detected by a detector and the cooling temperature can be controlled to keep the concentration constant.

The non-condensed gas separated from the dry distillation gas is decompressed and then undergoes desulfurization process with a desulfurizer. The sulfur collected by the desulfurizer can also be used in the production of the positive electrode active material.

The non-condensed gas that undergoes the desulfurization process is a hydrocarbon gas free from sulfur component, and is sent to a gas treatment unit (w1). The gas treatment unit (w1) includes a combustor and a carbon dioxide collector. The gas to be condensed after the desulfurization process undergoes combustion in the combustor, and then carbon dioxide is collected in the carbon dioxide collector, and the rest is exhausted. A part or all of the collected CO₂ can be used for subcritical or supercritical carbon dioxide treatment on the crude carbonized product in the cleaning unit (y2) described above.

On the other hand, the oil component separated from the dry distillation gas is distilled with a distiller at a temperature equal to or higher than the boiling point of sulfur. By this treatment, light oil containing a large amount of sulfur is separated, and heavy oil containing almost no sulfur remained.

The sulfur-containing light oil undergoes desulfurization process in a desulfurizer and thereby is separated into sulfur and a sulfur-free light oil and they are collected. The separated light oil containing no sulfur component can be recycled as fuel.

Note that, the separation unit (z1) according to the present embodiment includes a cooler, a distiller, and a desulfurizer, but any separation unit can be used in the separation unit (z1) according to the present invention as long as the dry distillation gas obtained by the heat-treatment unit (x) can be separated into a gas component, heavy oil, light oil, and sulfur.

As described above, the separated heavy oil and sulfur are kneaded with the refined carbonized product (positive electrode active material) collected from the solid matter and the ionic raw material by using a kneader as the kneading unit (z2), and then heat-treated in the heat treater as the heat-treatment unit (z3) (in non-oxidizing atmosphere), pulverized in a pulverizer included in the adjusting unit (z4), and then dried in a vacuum dryer included in the adjusting unit (z4), whereby an intended positive electrode active material in solid form can be produced.

Note that, the kneading unit (z2), the heat-treatment unit (z3), and the adjusting unit (z4) are freely chosen as long as the objects of the present invention are not compromised.

The kneading unit (z2) may be an industrially commonly used dry mixer. Examples of the dry mixer include a V-type mixer, a W-type mixer, a ribbon mixer, a drum mixer, and a dry ball mill. The kneading can also be performed by wet mixing as long as the object of the present invention is not compromised.

The heat-treatment unit (z3) includes an electric heat treater or a combustion heat treater, or a batch heat treater or a flow heat treater.

The pulverizer included in the adjusting unit (z4) includes a vibration mill, a jet mill, and a dry ball mill.

Here, the ionic raw material, the carbonized product for positive electrode active material, the heavy oil, and sulfur correspond respectively to Component (A), Component (B), Component (C), and Component (D) in <1. Method for producing positive electrode active material> described above.

Although the details of the ion raw material have been described above as Component (A), and thus description thereof is omitted here, for example, raw materials such as an inorganic detergent, an eggshell, a plant-derived substance (plants and vegetation), a seashell, gypsum, and hot spring scale are subjected to a treatment such as a heat-treatment with a heat treater as an ionic raw material production unit (w4), and used as an ionic raw material containing one or more elements selected from the group consisting of Na, K, Ca, and Mg.

In the present embodiment, the carbonized product for positive electrode active material (Component (B)), the heavy oil (Component (C)), and the sulfur (Component (D)) used in the production of the positive electrode active material are not limited to those derived from the rubbers used as a raw material, but those produced from other raw materials or commercially available products may be added as necessary.

However, at least a part of the carbonized product for positive electrode active material (Component (B)), of the heavy oil (Component (C)), and of sulfur (Component (D)) used for producing the positive electrode active material are preferably those obtained by the method for producing an electrode member of the present invention.

That is, in the method for producing an electrode member of the present invention, at least a part of the carbonized product for positive electrode active material (Component (B)) is preferably a refined carbonized product obtained in a manner that sulfur-containing rubbers are thermally decomposed and separated into a solid matter and a dry distillation gas, a crude carbonized product is sorted out from the solid matter, and the refined carbonized product is obtained by heat-treatment of the crude carbonized product; at least a part of the heavy oil (Component (C)) is preferably heavy oil obtained in a manner that the dry distillation gas is cooled and separated into an oil component and a gas, the oil component is distilled and separated into the heavy oil, light oil, and sulfur; and at least a part of the sulfur (Component (D)) is preferably sulfur obtained in a manner that the oil component is distilled and separated into heavy oil, light oil, and the sulfur.

In production of the positive electrode active material, a sulfide (particularly hydrogen sulfide) generated during heat-treatment in the heat-treatment unit (z3) is desulfurized with an aqueous solution containing a neutralizing agent in a neutralizer as the neutralization treatment unit (w5), and a sulfur content is collected. Thereafter, a solid matter containing an ion content (neutralized solid matter content) obtained by evaporating water from the aqueous solution containing a neutralizing agent used in the desulfurization can also be recycled as an ionic raw material.

The embodiment of the method for producing an electrode member of the present invention has been described above with reference to the drawings, but the embodiment disclosed herein is illustrative in all respects and is not restrictive. In particular, in the embodiment disclosed herein, values that can be easily conceived by those skilled in the art can be adopted for matters that are not explicitly disclosed, such as operating conditions, various parameters, component dimensions, weights, volumes and the like without departing from the scope usually implemented by those skilled in the art.

### <3. Positive Electrode Mixture>

The positive electrode mixture of the present invention may be made of only the positive electrode active material of the present invention, but may be used in combination with a conductive material as another conductive material (and another material as necessary) in order to reduce the internal resistance of the electrode.

The conductive material has the role of improving electronic conductivity when forming an electrode. The conductive material is required to be a material that has conductivity (electron conductivity) and does not compromise the performance of the positive electrode active material according to an embodiment of the present invention, and may be either an inorganic or an organic material but is typically a carbon-based material.

As the carbon-based material, any carbon-based material used in secondary batteries can be used, and more specific examples thereof include graphite powder, carbon black (such as acetylene black, ketjen black, furnace black, or the like), and a fibrous carbon material (such as carbon nanotubes, carbon nanofibers, or vapor-grown carbon fibers).

Among them, carbon black is fine particles and has a large surface area, and is added to the positive electrode mixture thereby enhancing the conductivity inside the resultant electrode and also enabling to improve the charge-discharge efficiency and the large current discharge characteristics.

The carbonized product described in <2. Method and System for Producing Electrode Member> can also be used as a carbon-based material as a conductive material.

The shape and size of the carbon-based material as a conductive material can be appropriately selected in view of the intended use of the electrode and the like, but when the carbon-based material is in particle form, its particle diameter is, for example, from 0.03 to 500 µm, and when the carbon-based material is in fibrous form, its diameter is from 2 nm to 20 µm, and its total length is approximately from 0.03 to 500 µm.

The conductive material used in the present invention may be one type, or two or more types of conductive materials having different sizes (particle diameter, fiber diameter and fiber length) and crystallinity or the like may be used in a freely chosen ratio.

The proportion of the conductive material in the positive electrode mixture can be appropriately chosen in view of the intended use of the electrode and the like, but in a case where the conductive material is a carbon-based material, the proportion of the carbon-based material in the electrode is typically from 5 to 100 parts by weight per 100 parts by weight of the electrode active material.

The positive electrode mixture of the present invention may contain other components to the extent that the object is not compromised. As other components, typical examples thereof include a binder.

The binder has a function as a binding agent for binding other electrode constituent materials.

Examples of the binder include a binder made of an organic polymer compound. Examples of the organic polymer compound as the binder include: polysaccharides such as methyl cellulose, hydroxymethyl cellulose, hydroxyethyl cellulose, hydroxypropyl cellulose, carboxymethyl hydroxyethyl cellulose, and nitrocellulose, and derivatives thereof;
polyvinylidene fluoride (hereinafter, referred to as PVDF in some cases), polytetrafluoroethylene (hereinafter, referred to as PTFE in some cases), ethylene tetrafluoride-propylene hexafluoride-vinylidene fluoride copolymer, propylene hexafluoride-vinylidene fluoride copolymer, ethylene tetrafluoride-perfluorovinyl ether copolymer; phenol resin; melamine resin; polyurethane resin; urea resin; polyamide resin; polyimide resin; polyamideimide resin; petroleum pitch; and coal pitch.

As the binder, a plurality of types of binders may be used.

The blending amount of the binder in the constituent materials of the electrode is, for example, usually approximately from 0.5 to 50 parts by weight and preferably approximately from 1 to 30 parts by weight per 100 parts by weight of the total of the positive electrode active material and the conductive material.

### <4. Secondary Battery>

The secondary battery of the present invention includes a positive electrode, a negative electrode, and an electrolyte, and the positive electrode is characterized in which the positive electrode mixture of the present invention is used. Note that, the structure of the secondary battery of the present invention is not particularly limited, and a typical and known structure of a secondary battery can be adopted. Examples thereof include a laminated (flat) battery, and a wound (cylindrical) battery.

Each of the components will be described below.

The positive electrode includes a current collector and a positive electrode active material layer formed on a surface of the current collector, the positive electrode active material layer is formed of the positive electrode mixture (the positive electrode active material, the conductive material, and the binder) of the present invention.

The current collector is not particularly limited, and a typical and known current collector can be used. Examples thereof include foil, mesh, expanded grid (expanded metal), and punched metal, made by using a conductive material such as aluminum, nickel, copper, and stainless steel (SUS).

The size and thickness of the current collector are determined according to the intended use of the battery, and a suitable size can be appropriately selected according to the size of the positive electrode to be used.

The positive electrode is typically produced by a method in which a positive electrode mixture (a positive electrode active material, a conductive material, and a binder) and a solvent are mixed to adjust a slurry, the slurry is applied onto a current collector, dried and then pressed or the like to firmly fix the slurry, whereby a positive electrode active material layer is formed on the surface of the current collector and the positive electrode is obtained.

Examples of the solvent for the slurry include: amines, such as N,N-dimethylaminopropylamine and diethyl triamine; ethers, such as ethylene oxide and tetrahydrofuran; ketones, such as methyl ethyl ketone; esters, such as methyl acetate; and aprotic polar solvents, such as dimethylacetamide and N-methyl-2-pyrrolidone.

The method for applying the slurry onto the current collector is not limited as long as the object of the present invention is not compromised, and examples thereof include slit die coating method, screen coating method, curtain coating method, knife coating method, gravure coating method, and electrostatic spraying method.

The negative electrode includes a current collector and a negative electrode active material layer formed on a surface of the current collector, and the negative electrode active material layer is typically formed of a negative electrode mixture containing a negative electrode active material.

Examples of the negative electrode active material include carbon materials such as natural graphite, artificial graphite, cokes, hard carbon, carbon black, pyrolytic carbons, carbon fibers, and an organic polymer compound fired body. The shape of the carbon material may be any one selected from the group of a flake shape such as natural graphite, a spherical shape such as mesocarbon microbeads, a fibrous shape such as graphitized carbon fiber, an agglomerate of fine powder, and the like. Here, the carbon material also serves as a conductive material in some cases.

As described above, the negative electrode active material in the present invention is not limited to a specific one, but hard carbon may be used.

Hard carbon is a carbon material whose stacking order is almost unchanged even by being heat-treated to high temperature of 2000°C or higher, and is also referred to as non-graphitizable carbon. Examples of the hard carbon include a carbon fiber created by carbonization of an infusible yarn, which is an intermediate product in the process of producing a carbon fiber, at about 1000 to 1400°C, and a carbon material created by air oxidation of an organic compound at about 150 to 300°C followed by carbonization of the organic compound at about 1000 to 1400°C. The method for producing the hard carbon is not particularly limited, and hard carbon produced by a typical and known method can be used.

As the negative electrode active material, the refined carbonized product described in <2. Method and System for Producing Electrode Member> can be used. Note that, as the refined carbonized product, the same one as Component (B) in the positive electrode active material can be used.

That is, a preferred example of the negative electrode active material is at least partially a refined carbonized product obtained in a manner that sulfur-containing rubbers are thermally decomposed and separated into a solid matter and a dry distillation gas, a crude carbonized product is sorted out from the solid matter, and the refined carbonized product is obtained by heat-treatment of the crude carbonized product.

As the negative electrode active material, one type or a mixture of two or more types of the above-described carbon materials (including the refined carbonized product) may be used.

The content of the negative electrode active material in the negative electrode active material layer is not particularly limited, but is preferably from 80 to 95 mass%.

As the binder, there can be used one similar to those that can be used for the positive electrode, and thus the description thereof is omitted. As the current collector, a conductive material such as aluminum, nickel, copper, or stainless steel (SUS) is used. Similarly to the current collector for the positive electrode, the current collector is made of foil, mesh, expanded grid (expanded metal), punched metal, or the like.

As a method for forming the negative electrode active material layer on the current collector, a method similar to the method for forming the positive electrode active material layer on the current collector can be adopted.

In the secondary battery of the present invention, the type of the electrolyte is not particularly limited, and can be selected as necessary. The electrolyte may be at least one selected from a group pf a solid matter electrolyte and a liquid electrolyte (that is, an electrolytic solution). When the electrolyte is an electrolytic solution, the electrolytic solution contains an electrolyte salt and a nonaqueous solvent.

As the electrolyte salt, an electrolyte salt to be used for the secondary battery (such as sodium salt or potassium salt) can be used. One of the electrolyte salts may be used singly, or two or more thereof may be used in combination.

As the nonaqueous solvent, a nonaqueous solvent to be used in the secondary battery can be used, and examples thereof that can be used include: carbonates such as propylene carbonate, ethylene carbonate, dimethyl carbonate, diethyl carbonate, and ethyl methyl carbonate; ethers such as 1,2-dimethoxyethane and 1,3-dimethoxypropane; amides such as N,N-dimethylformamide and N,N-dimethylacetamide; carbamates such as 3-methyl-2-oxazolidone; phosphates such as tris(2,2,2-trifluoroethyl)phosphate; or a solvent obtained by introducing a fluorine substituent into the above-mentioned organic solvent.

As a nonaqueous solvent for a safe electrolytic solution with no flash point, phosphates are preferable, and tris(2,2,2-trifluoroethyl)phosphate is particularly preferable.

Preferred examples of the electrolyte salt to be dissolved in phosphates (particularly tris(2,2,2-trifluoroethyl)phosphate) include sodium bis(fluorosulfonyl)imide (NaFSI) and potassium bis(fluorosulfonyl)imide (KFSI), which are disclosed in Examples.

NaFSI is an electrolyte salt suitable for a case where the ion species (derived from Component (A)) contained in the positive electrode active material of the present invention contains a large amount of sodium. KFSI is an electrolyte salt suitable for a case where the ion species (derived from Component (A)) contained in the positive electrode active material of the present invention contains a large amount of potassium and/or calcium.

A preferred example of the secondary battery of the present invention is a secondary battery in which a positive electrode mixture containing a positive electrode active material obtained by the method for producing a positive electrode active material of the present invention is used.

In a preferred example of the secondary battery of the present invention, at least a part of preferred examples of the negative electrode active material is preferably a refined carbonized product obtained in a manner that sulfur-containing rubbers are thermally decomposed and separated into a solid matter and a dry distillation gas, a crude carbonized product is sorted out from the solid matter, and the refined carbonized product is obtained by heat-treatment of the crude carbonized product.

In a preferred example of the secondary battery of the present invention, the electrolytic solution is preferably tris(2,2,2-trifluoroethyl)phosphate (TFEP) containing dissolved sodium bis(fluorosulfonyl)imide (NaFSI) or potassium bis(fluorosulfonyl)imide (KFSI) as an electrolyte salt.

### Examples

Hereinafter, the present invention will be described more specifically with reference to Examples, but the present invention is not limited thereto. Incidentally, "%" described below indicates "wt.%" unless otherwise specified.

### Experimental Example 1

A negative electrode was prepared as follows.

As a negative electrode active material, a waste tire-derived carbonized product "Renaisis A1 (product number)" was used.

The waste tire-derived carbonized product "Renaisis A1 (product number)" is a refined carbonized product produced by the system for producing an electrode member according to FIG. 1. Specifically, it is a refined carbonized product obtained in a manner that a waste tire is heated in an inert atmosphere container at 400°C for 2 hours, oil components in the waste tire are gasified and cooled into an oil component (total of gasification and oil component is about 55%), a residue that does not turn into gas or oil is collected, the collected waste tire thermal decomposition residue is further heat-treated and then pulverized into particles having an average particle diameter of 20 µm, then a magnetic body is completely removed with a 16000 Gauss electromagnetic separator to obtain a crude carbonized product derived from the waste tire thermal decomposition residue, this crude carbonized product is cleaned with supercritical carbon dioxide (CO₂ cleaning), followed by pulverization to adjust a particle diameter.

A negative electrode mixture was obtained in a manner that 1.5 g of a negative electrode active material (waste tire-derived carbonized product) (92.71% of the total) and 0.106 g of polyacrylic acid (product name: 20CLPAH; available from FUJIFILM Wako Pure Chemical Corporation) as a binder (6.55% of the total) were mixed (kneaded) together with a solvent of 1.2 g of an aqueous solution ("TUBALL^{™} BATT H₂O CMC" available from Kusumoto Chemicals, Ltd.) containing 0.007 g of carboxymethyl cellulose (CMC) and 0.005 g of CNT.

The resulting negative electrode mixture was then applied onto an aluminum sheet (16 µm in thickness) serving as a negative electrode current collector, and dried at 70°C for 3 hours to obtain a negative electrode sheet. A 11.3 mm ϕ sheet was cut out from the resulting negative electrode sheet and was used as the negative electrode.

A positive electrode active material of Experimental Example 1 was produced by the following procedure.

As a carbonized product for positive electrode active material, a waste tire-derived carbonized product "Renaisis A1 (product number)" (the same one as that of the negative electrode of Experimental Example 1) was used. A mixture of 5.5 g (24.2% of the total raw materials) of a carbonized product for positive electrode active material (Component (B)), 8.44 g (37.2% of the total raw materials) of sodium percarbonate (Component (A)), 2.75 g (12.1% of the total raw materials) of coal tar (Component (C)), and 6 g (26.4% of the total raw materials) of sulfur (Component (D)) were kneaded in a stainless steel container, and then put into a heating furnace, and nitrogen gas was allowed to flow for 10 minutes in order to create an inert atmosphere inside the container and then heating was started. The temperature increase was set to reach 300°C in 50 minutes, and heating was continued even after reaching 300°C and was stopped at 350°C. Thereafter, after the temperature had been lowered to 200°C, the container was taken out from the heating furnace and allowed to cool down naturally. After the internal temperature of the container had been lowered to 50°C or lower, a synthesized product was taken out. The weight of the synthesized product was found to be 15.2 g. The synthesized product was pulverized with a mixer to obtain the positive electrode active material of Experimental Example 2 composed of powders with an average particle diameter of 20 µm. Physical properties evaluation confirmed that sodium thiosulfate was contained in the positive electrode active material of Experimental Example 1.

A positive electrode of Experimental Example 1 was obtained as follows.

A positive electrode mixture of Experimental Example 1 was obtained in a manner that 2 g of the positive electrode active material of Experimental Example 1 (94.49% of the total), 0.056 g of acetylene black (AB, available from Denki Kagaku Kogyo K.K. (HS100)) as a conductive material (2.64% of the total) and 0.673 g of an NMP solvent (substantial CNT content: 0.003 g; solid matter content ratio: 0.08%) containing 0.058 g of PVDF (2.71% of the total) were mixed (kneaded) and thus a homogeneous mixture was obtained. The resulting positive electrode mixture was then applied onto an aluminum sheet (16 µm in thickness) serving as a positive electrode current collector, and dried at 50°C for 3 hours to obtain a positive electrode sheet. A 15 mm ϕ sheet was cut out from the resulting positive electrode sheet and was used as the positive electrode of Experimental Example 1.

The resulting positive electrode and negative electrode were put together with an electrolytic solution containing sodium bis(fluorosulfonyl)imide (NaFSI) as a sodium salt dissolved at a concentration of 2 mol/L in tris(2,2,2-trifluoroethyl)phosphate (TFEP) (hereinafter described as "NaFSI/TFEP") and Celgard 2400 as a separator and thereby obtaining a battery of Experimental Example 1 (coin-type battery (cylindrical shape, outer diameter: 20 mm; height: 3.2 mm), hereinafter described as a "coin-type battery (R2032)").

The battery of Experimental Example 1 was used to conduct a charge-discharge test at a temperature maintained at 25°C under the conditions set forth below.
(Cell configuration) Bipolar type
Positive electrode: an electrode containing the positive electrode active material
Negative electrode: an electrode containing the negative electrode active material
Electrolyte: 2M NaFSI/TFEP
(Charge-Discharge conditions)
Voltage range: 0.5 to 3.9 V

Charging was performed by CVCC charging in which a constant current was continuously applied up to 3.9 V, then a current enough to maintain the voltage was applied for 5 hours, and then the current value decreased.

The results of the charge-discharge test of the battery of Experimental Example 1 are as follows.
73.5 µA/1.766 cm² (positive electrode: 15 mm ϕ)
Charge-discharge cycle number: 20
Discharge time: about 4 hours (73.5 µAh)

As described above, it has been confirmed that a chargeable and dischargeable secondary battery can be produced by using a positive electrode active material created by heat-treatment of the sodium percarbonate (Component (A)), the carbonized product for positive electrode active material (Component (B)), coal tar (Component (C)), and sulfur (Component (D)) in an inert gas atmosphere.

### Experimental Example 2

A positive electrode active material of Experimental Example 2 was obtained by the following procedure.

As a carbonized product for positive electrode active material, a waste tire-derived carbonized product "Renaisis A1 (product number)" (the same one as that of the negative electrode of Experimental Example 1) was used. A total of 48.8 g of raw materials of 10 g of carbonized product for positive electrode active material (Component (B)) (20% of the total raw materials), 25 g of potassium hydrogen carbonate (Component (A)) (51% of the total raw materials), 3.8 g of coal tar (Component (C)) (8% of the total raw materials) and 10 g of sulfur (Component (D)) (20% of the total raw materials) were kneaded in a stainless steel container, and then put into a heating furnace and nitrogen gas was allowed to flow for 10 minutes in order to create an inert atmosphere inside the container and then heating was started. The temperature increase was set to reach 300°C in 50 minutes, and heating was continued even after reaching 300°C and was stopped at 350°C. Thereafter, after the temperature had been lowered to 200°C, the container was taken out from the heating furnace and allowed to cool down naturally. After the internal temperature of the container had been lowered to 50°C or lower, a synthesized product was taken out. The weight of the synthesized product was found to be 32.5 g, with a yield of 67%. The synthesized product was pulverized with a mixer to obtain the positive electrode active material of Experimental Example 2 composed of powders with an average particle diameter of 20 µm. Physical properties evaluation confirmed that potassium thiosulfate was contained in the positive electrode active material of Experimental Example 2.

A positive electrode mixture of Experimental Example 2 was obtained in a manner that 1.003 g of the positive electrode active material of Experimental Example 2 (86% of the total), 0.063 g of AB (5.41% of the total) as a conductive material, and 2.453 g (substantial CNT content: 0.025 g; solid matter content ratio: 2.14%) of an NMP solvent containing 0.073 g of PVDF (6.27% of the whole) were mixed (kneaded) and thus a homogeneous mixture was obtained.

The resulting positive electrode mixture was then applied onto an aluminum sheet (16 µm in thickness) serving as a positive electrode current collector, and dried at 50°C for 3 hours to obtain a positive electrode sheet. A 15 mm ϕ sheet was cut out from the resulting positive electrode sheet and was used as the positive electrode of Experimental Example 2.

The negative electrode was prepared by the same procedure as in Experimental Example 1.

The resulting positive electrode and negative electrode were put together with an electrolytic solution containing potassium bis(fluorosulfonyl)imide (KFSI) as a potassium salt dissolved at a concentration of 2 mol/L in tris(2,2,2-trifluoroethyl)phosphate (TFEP) (hereinafter described as "KFSI/TFEP") and Celgard 2400 as a separator and thereby obtaining a battery of Experimental Example 2 (coin-type battery (R2032)).

The battery of Experimental Example 2 was used to conduct a charge-discharge test at a temperature maintained at 25°C under the conditions set forth below.
(Cell configuration) Bipolar type
Positive electrode: an electrode containing the positive electrode active material
Negative electrode: an electrode containing the negative electrode active material
Electrolyte: 2M KFSI/TFEP
(Charge-Discharge Conditions)
Voltage range: 2.0 to 4.2 V

Charging was performed by CVCC charging in which a constant current was continuously applied up to 4.2 V, then a current enough to maintain the voltage was applied for 5 hours, and the current value then decreased.

The results of the charge-discharge test are as follows.
64.7 µA/1.766 cm² (positive electrode: 15 mm ϕ)
Charge-discharge cycle number: 5
Discharge time: about 5 hours (64.7 µAh)

As described above, it has been confirmed that a chargeable and dischargeable secondary battery can be produced by using a positive electrode active material created by heat-treatment of the potassium hydrogen carbonate (Component (A)), the carbonized product for positive electrode active material (Component (B)), coal tar (Component (C)) and sulfur (Component (D)) in an inert gas atmosphere.

### Experimental Example 3

The positive electrode active material of Experimental Example 3 was obtained by the following procedure.

With a heating furnace, wood combustion ash (plant combustion ash) obtained from the combustion of wood (sasanqua camellia) in air was used as Component (A). As a carbonized product for positive electrode active material (Component (B)), a waste tire-derived carbonized product "Renaisis A1 (product number)" (the same as that of the negative electrode of Experimental Example 1) was used.

A total of 30.7 g of raw materials of 12.7 g of wood combustion ash (Component (A)) (41% of the total raw material), 6 g of carbonized product for positive electrode active material (Component (B)) (20% of the total raw material), 3 g of coal tar (10% of the total raw material), and 9 g of sulfur (29% of the total raw material)) were kneaded in a stainless steel container, and then put into a heating furnace, and nitrogen gas was allowed to flow for 10 minutes in order to create an inert atmosphere inside the container and then heating was started. The temperature increase was set to reach 300°C in 50 minutes, and heating was continued even after reaching 300°C and was stopped at 350°C. Thereafter, after the temperature had been lowered to 200°C, the container was taken out from the heating furnace and allowed to cool down naturally. After the internal temperature of the container had been lowered to 50°C or lower, a synthesized product was taken out. The weight of the synthesized product was found to be 21.9 g, with a yield of 71%. The synthesized product was pulverized with a mixer to obtain the positive electrode active material of Experimental Example 3 composed of powders with an average particle diameter of 20 µm.

A positive electrode mixture of Experimental Example 3 was obtained by mixing (kneading) 1.14 g of the positive electrode active material of Experimental Example 3, 0.08 g of AB as a conductive material, and 2.453 g of an NMP solvent (substantial CNT content: 0.025 g; solid matter content ratio: 2.14%) containing 0.073 g of PVDF and thus a homogeneous mixture was obtained.

The resulting positive electrode mixture was then applied onto an aluminum sheet (16 µm in thickness) serving as a positive electrode current collector, and dried at 50°C for 3 hours to obtain a positive electrode sheet. A 12.9 mm ϕ sheet was cut out from the resulting positive electrode sheet and was used as the positive electrode of Experimental Example 3.

The negative electrode was prepared by the same procedure as described in Experimental Example 1.

The resulting positive electrode and negative electrode were put together with an electrolytic solution containing potassium bis(fluorosulfonyl)imide (KFSI) as a potassium salt dissolved at a concentration of 2 mol/L in tris(2,2,2-trifluoroethyl)phosphate (TFEP) ("KFSI/TFEP") and Celgard 2400 as a separator to obtain a battery of Experimental Example 3 (coin-type battery (R2032)).

The battery of Experimental Example 3 was used to perform a charge-discharge test at a temperature maintained at 25°C under the conditions set forth below.
(Cell configuration) Bipolar type
Positive electrode: an electrode containing the positive electrode active material
Negative electrode: an electrode containing the negative electrode active material
Electrolyte: 2M KFSI/TFEP
(Charge-discharge conditions)
Voltage range: 1.2 to 3.8 V
CVCC charging, CC discharging
(CV was held for 30 hours at first voltage-holding, for 10 hours at second voltage-holding, and for 5 hours at third and subsequent voltage-holdings)

The results of the charge-discharge test of the battery of Experimental Example 3 are as follows.
112 µA/1.306 cm² (positive electrode: 12.9 mm ϕ)
Charge-discharge cycle number: 27
Discharge time: about 1 hour (112 µAh)

As described above, it has been confirmed that a chargeable and dischargeable secondary battery can be produced by using a positive electrode active material obtained by heat-treatment of the wood combustion ash (Component (A)), the carbonized product for positive electrode active material (Component (B)), coal tar (Component (C)), and sulfur (Component (D)) in an inert gas atmosphere.

### Experimental Example 4

The positive electrode active material of Experimental Example 4 was obtained by the following procedure.

With a heating furnace, an eggshell was heat-treated at 1200°C to obtain a calcinated eggshell (main component: CaO), and this calcinated eggshell was used as Component (A). As a carbonized product for positive electrode active material (Component (B)), a waste tire-derived carbonized product "Renaisis A1 (product number)" (the same as that of the negative electrode of Experimental Example 1) was used.

A total of 48.8 g of raw materials of 25 g of the calcinated eggshell (Component (A)) (51% of the total raw materials), 10 g of carbonized product for positive electrode active material (Component (B)) (20% of the total raw materials), 3.8 g of coal tar (8% of the total raw materials), and 10 g of sulfur (20% of the total raw materials) were kneaded in a stainless steel container, and then put into a heating furnace, and nitrogen gas was allowed to flow for 10 minutes in order to create an inert atmosphere inside the container and then heating was started. The temperature increase was set to reach 300°C in 50 minutes, and heating was continued even after reaching 300°C and was stopped at 350°C. Thereafter, after the temperature had been lowered to 200°C, the container was taken out from the heating furnace and allowed to cool down naturally. After the internal temperature of the container had been lowered to 50°C or lower, a synthesized product was taken out. The weight of the synthesized product was found to be 32.5 g, with a yield of 67%. The synthesized product was pulverized with a mixer to obtain the positive electrode active material of Experimental Example 4 composed of powders with an average particle size of 20 µm.

A positive electrode mixture of Experimental Example 4 was obtained by mixing (kneading) 4.015 g of the positive electrode active material of Experimental Example 4, 0.08 g of AB as a conductive material were mixed (kneaded), and 2.453 g of an NMP solvent (substantial CNT content: 0.025 g; solid matter content ratio: 2.14%) containing 0.073 g of PVDF and thus a homogeneous mixture was obtained.

The resulting positive electrode mixture was then applied onto an aluminum sheet (16 µm in thickness) serving as a positive electrode current collector, and dried at 50°C for 3 hours to obtain a positive electrode sheet. A 11.3 mm ϕ sheet was cut out from the resulting positive electrode sheet and was used as the positive electrode of Experimental Example 4.

The negative electrode was prepared by the same procedure as described in Experimental Example 1.

The resulting positive electrode and negative electrode were put together with an electrolytic solution containing potassium bis(fluorosulfonyl)imide (KFSI) as a potassium salt dissolved at a concentration of 2 mol/L in tris(2,2,2-trifluoroethyl)phosphate (TFEP) ("KFSI/TFEP") and Celgard 2400 as a separator to obtain a battery of Experimental Example 4 (coin-type battery (R2032)).

The battery of Experimental Example 4 was used to perform a charge-discharge test at a temperature maintained at 25°C under the conditions set forth below.
(Cell configuration) Bipolar type
Positive electrode: an electrode containing the positive electrode active material
Negative electrode: an electrode containing the negative electrode active material
Electrolyte: 2M KFSI/TFEP
(Charge-discharge conditions)
Voltage range: 1.2 to 3.8 V
CVCC charging, CC discharging
(CV was held for 30 hours at first voltage-holding, for 10 hours at second voltage-holding, and for 5 hours at third and subsequent voltage-holdings)

The results of the charge-discharge test of the battery of Experimental Example 4 are as follows.
112 µA/1 cm² (positive electrode: 11.3mm ϕ)
Charge-discharge cycle number: 48
Discharge time: about 1 hour (75 µAh)

As described above, it has been confirmed that secondary batteries can be created by using a positive electrode active material created by heat-treatment of the calcinated eggshell (Component (A)), the carbonized product for positive electrode active material (Component (B)), coal tar (Component (C)), and sulfur (Component (D)) in an inert gas atmosphere.

### Industrial Applicability

The present invention can provide a secondary battery by using an inexpensive material without using lithium, and hence the present invention is industrially extremely useful.

## Claims

1. A method for producing an electrode member by using sulfur-containing rubbers as a raw material, the electrode member being a positive electrode active material,
the method comprising:
a step (1) of thermally decomposing the raw material to separate into a solid matter and a dry distillation gas;
a step (2) of sorting out a crude carbonized product from the solid matter;
a step (3) of cleaning the crude carbonized product and then heat-treating under a non-oxidizing atmosphere to obtain a refined carbonized product;
a step (4) of cooling the dry distillation gas to separate into an oil component and a gas, and distilling the oil component to separate into heavy oil, light oil, and sulfur; and
a step (5) of pulverizing and drying a solid matter to obtain a positive electrode active material, the solid matter obtained by kneading: an ionic raw material (A) comprising one or more elements selected from the group consisting of Na, K, Ca, and Mg;
a carbonized product for positive electrode active material (B); heavy oil (C); and sulfur (D) and heat-treating under a non-oxidizing atmosphere,
wherein the method satisfies either one or more of Requirements (i) to (iii) set forth below:
Requirement (i): at least a part of the carbonized product for positive electrode active material (B) is the refined carbonized product obtained by the step (3)
Requirement (ii): at least a part of the heavy oil (C) is heavy oil obtained by the step (4)
Requirement (iii): at least a part of the sulfur (D) is sulfur obtained by the step (4).

2. The method for producing an electrode member according to claim 1, wherein at least a part of Component (A) is one or more selected from the group consisting of an inorganic detergent, plant combustion ash, a calcinated eggshell, a calcinated seashell, gypsum, and hot spring scale.

3. The method for producing an electrode member according to claim 1 or 2, wherein at least a part of Component (A) is wood combustion ash obtained from combustion of wood.

4. The method for producing an electrode member according to claim 1 or 2, wherein at least a part of Component (A) is a calcinated eggshell.

5. The method for producing an electrode member according to any of claims 1 to 4, wherein the cleaning of the crude carbonized product in the step (3) is a subcritical or supercritical carbon dioxide treatment.

6. The method for producing an electrode member according to any of claims 1 to 5, wherein the sulfur-containing rubbers are rubbers derived from a tire.

7. A method for producing an electrode member by using sulfur-containing rubbers as a raw material, the electrode member being a negative electrode active material, the method comprising the steps of: thermally decomposing the raw material to separate into a solid matter and a dry distillation gas; sorting out an crude carbonized product from the solid matter; treating the crude carbonized product with subcritical or supercritical carbon dioxide and then heat-treating under a non-oxidizing atmosphere to obtain a refined carbonized product as a negative electrode active material.

8. A system for producing an electrode member by using the method for producing an electrode member according to any of claims 1 to 7,
the system comprising:
a heat-treatment unit (x) configured to thermally decompose the raw material to separate into a solid matter and a dry distillation gas;
a sorting unit (y1) configured to sort out a crude carbonized product from the solid matter;
a cleaning unit (y2) in which the crude carbonized product is cleaned;
a heat-treatment unit (y3) configured to heat-treat the crude carbonized product after cleaning under a non-oxidizing atmosphere to obtain a refined carbonized product;
a separation unit (z1) configure to cool the dry distillation gas to separate into an oil component and a gas, and distill the oil component to separate into heavy oil, light oil, and sulfur;
a kneading unit (z2) configured to knead an ionic raw material (A) comprising one or more elements selected from the group consisting of Na, K, Ca, and Mg, a carbonized product for positive electrode active material (B), heavy oil (C), and sulfur (D) to obtain a raw material mixture;
a heat-treatment unit (z3) configured to heat-treat the raw material mixture under a non-oxidizing atmosphere to obtain a solid matter; and
an adjusting unit (z4) configured to pulverize and dry the obtained solid matter.

9. The system for producing an electrode member according to claim 8, wherein in the cleaning unit (y2), the crude carbonized product is treated with subcritical or supercritical carbon dioxide.

10. The system for producing an electrode member according to claim 9, comprising a gas treatment unit (w1) configured to cause combustion of the gas separated by the separation unit (z1) and to collect generated carbon dioxide,
wherein in the cleaning unit (y2), the crude carbonized product is treated with subcritical or supercritical carbon dioxide by using the carbon dioxide collected by the gas treatment unit (w1).

11. The system for producing an electrode member according to any of claims 8 to 10, wherein the heat-treatment unit (x) is configured to cause combustion of the light oil separated by the separation unit (z1) and to thermally decompose the raw material by using generated heat.

12. The system for producing an electrode member according to any of claims 8 to 11, comprising a pulverizing unit (w3) configured to pulverize the refined carbonized product obtained by the heat-treatment unit (y3).

13. The system for producing an electrode member according to any of claims 8 to 12, comprising an ionic raw material production unit (w4) configured to produce one or more selected from the group consisting of an inorganic detergent, plant combustion ash, a calcinated eggshell, a calcinated seashell, gypsum, and hot spring scale.

14. The system for producing an electrode member according to any of claims 8 to 13, comprising a neutralization treatment unit (w5), wherein
the neutralization treatment unit (w5) is configured to neutralize a sulfide generated in the heat-treatment unit (z3) to produce a neutralized solid matter content, and
the ionic raw material (A) contains the neutralized solid matter content.

15. The system for producing a positive electrode active material according to any of claims 8 to 14, wherein the sulfur-containing rubbers are rubbers derived from a tire.

16. A method for producing a positive electrode active material, comprising a step of heat-treating a raw material mixture obtained by mixing Components (A) to (D) set forth below under a non-oxidizing atmosphere:
Component (A): an ionic raw material comprising one or more elements selected from the group consisting of Na, K, Ca, and Mg
Component (B): a carbonized product for positive electrode active material
Component (C): heavy oil
Component (D): sulfur.

17. The method for producing a positive electrode active material according to claim 16, wherein at least a part of Component (A) is one or more selected from the group consisting of an inorganic detergent, plant combustion ash, a calcinated eggshell, a calcinated seashell, gypsum, and hot spring scale.

18. The method for producing a positive electrode active material according to claim 16 or 17, wherein at least a part of Component (B) is a refined carbonized product obtained by thermally decomposing sulfur-containing rubbers to separate into a solid matter and a dry distillation gas, sorting out a crude carbonized product from the solid matter, and heat-treating the crude carbonized product.

19. The method for producing a positive electrode active material according to any of claims 16 to 18, wherein at least a part of Component (C) is heavy oil obtained by thermally decomposing sulfur-containing rubbers to separate into a solid matter and a dry distillation gas, cooling the dry distillation gas to separate into an oil component and a gas, distilling the oil component to separate into the heavy oil, light oil, and sulfur.

20. The method for producing a positive electrode active material according to any of claims 16 to 19, wherein at least a part of Component (D) is sulfur obtained by thermally decomposing sulfur-containing rubbers to separate into a solid matter and a dry distillation gas, cooling the dry distillation gas to separate into an oil component and a gas, distilling the oil component to separate into heavy oil, light oil, and the sulfur.

21. The method for producing a positive electrode active material according to claim 16, wherein Component (A) is one or more selected from the group consisting of an inorganic detergent, plant combustion ash, a calcinated eggshell, a calcinated seashell, gypsum, and hot spring scale,
at least a part of Component (B) is a refined carbonized product obtained by thermally decomposing sulfur-containing rubbers to separate into a solid matter and a dry distillation gas, sorting out a crude carbonized product from the solid matter, and heat-treating the crude carbonized product,
at least a part of Component (C) is heavy oil obtained by cooling the dry distillation gas to separate into an oil component and a gas, distilling the oil component to separate into the heavy oil, light oil, and sulfur, and
at least a part of Component (D) is sulfur obtained by distilling the oil component to separate into heavy oil, light oil, and the sulfur.

22. The method for producing a positive electrode active material according to any of claims 18 to 21, wherein the sulfur-containing rubbers are rubbers derived from a tire.

23. A positive electrode active material obtained by the method according to any of claims 16 to 22.

24. A positive electrode mixture comprising the positive electrode active material according to claim 23.

25. A secondary battery comprising a positive electrode, a negative electrode, and an electrolyte, the positive electrode comprising the positive electrode mixture according to claim 24.

26. A method for producing an electrode member by using sulfur-containing rubbers as a raw material, wherein the electrode member is a positive electrode active material, and
the method comprising steps in which the raw material is thermally decomposed to separate into a solid matter and a dry distillation gas; the dry distillation gas is cooled to separate into an oil component and a gas; the oil component is distilled to separate into heavy oil, light oil, and sulfur; the thus-obtained heavy oil and the sulfur, an ionic raw material containing one or more elements selected from the group consisting of Na, K, Ca, and Mg, and a carbonized product for positive electrode active material are kneaded and heat-treated under a non-oxidizing atmosphere to obtain a positive electrode active material.
